# EUROPEAN PATENT APPLICATION

(11) **EP 4 632 470 A1**
(43) Date of publication of application: **15.10.2025**
(21) Application number: 25167957.7
(22) Date of filing: 02.04.2025
(51) Int. Cl.: G02C 5/12

(54) **NOSE PAD FOR EYEGLASSES**

(30) Priority: 11.04.2024 IT 202400008053
(71) Applicant: Luxottica S.r.l., 32021 Agordo (IT)
(72) Inventor: CANDIOTTO, Gianluca, 32021 Agordo BL (IT); MONESTIER, Henry, 32021 Agordo BL (IT); TIRELLI, Enrico Stefano, 32021 Agordo BL (IT)
(74) Representative: Modiano, Micaela Nadia

(57) **Abstract**

A nose pad (1) for eyeglasses, comprising a first engagement means (2) adapted to engage in the frame (4) of a pair of eyeglasses, the first engagement means (2) being provided with a lower end comprising at least one portion (5, 6) adapted to be inserted in the frame (4), and with a substantially spherical head (8) at the opposite end, which is adapted to engage in a corresponding cavity (9) defined in a second engagement means (10), so that the second engagement means (10) can rotate about different axes around the substantially spherical head (8).

## Description

The present invention relates to a nose pad for eyeglasses. The eyeglasses can be of the conventional type or they can be eyeglasses with integrated electronics, known as "smart glasses".

More specifically, the invention relates to a nose pad for eyeglasses that ensures a comfortable fit of the eyeglasses for the user.

As is known, eyeglasses are placed on the nose of the user, generally by means of a pair of nose pads which are adapted to be arranged at the sides of the nose, and the eyeglasses are supported by the nose.

The nose pads can be adjustable or fixed, and in any case they are made so as to allow the eyeglasses to be comfortably placed on the nose of the user, and therefore enable the user substantially not to perceive the nose pad on their nose.

Conventional nose pads are generally made of plastic material or silicone, or they have a structure made of metal which is fixed rotatably or firmly to the frame of the eyeglasses and to which a part directly in contact with the nose of the user is applied, which can be made of plastic material or silicone, or the like.

In the state of the art, nose pads are known that allow adjustment by the user in order to optimize the fit.

The aim of the present invention is to provide a nose pad for eyeglasses that is comfortable for the user and, at the same time, has a solid anchoring to the frame of the eyeglasses, while still allowing the possibility to adjust the angle and/or the orientation of the nose pad with respect to the frame.

Within this aim, an object of the present invention is to provide a nose pad for eyeglasses which, once mounted on the eyeglasses, can be moved.

Another object of the present invention is to provide a nose pad for eyeglasses that is made of metal and/or rubber and/or plastic material.

Another object of the present invention is to provide a nose pad for eyeglasses that is highly reliable, easily and practically implemented, and low-cost.

This aim and these and other objects which will become more apparent hereinafter are achieved by a nose pad for eyeglasses, characterized in that it comprises a first engagement means adapted to engage in the frame of a pair of eyeglasses, said first engagement means being provided with a lower end comprising at least one portion adapted to engage with a frame, by way of insertion under pressure and/or screwing into said frame, and with a substantially spherical head at the opposite end, which is adapted to engage in a corresponding cavity defined in a second engagement means, so that the second engagement means can rotate about different axes around said substantially spherical head.

Further characteristics and advantages of the invention will become more apparent from the description of preferred, but not exclusive, embodiments of the nose pad for eyeglasses according to the invention, which are illustrated by way of non-limiting example in the accompanying drawings wherein:

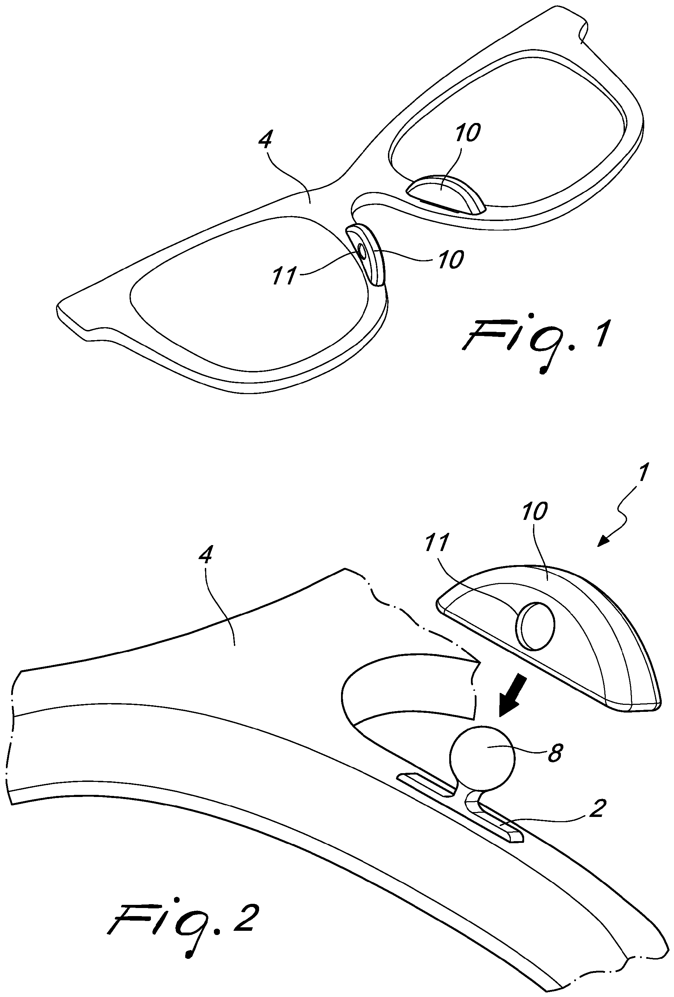

Figure 1 is a perspective view of a pair of eyeglasses with a pair of nose pads according to the present invention;
Figure 2 is an exploded partial perspective view of the eyeglasses with the nose pad according to the present invention;

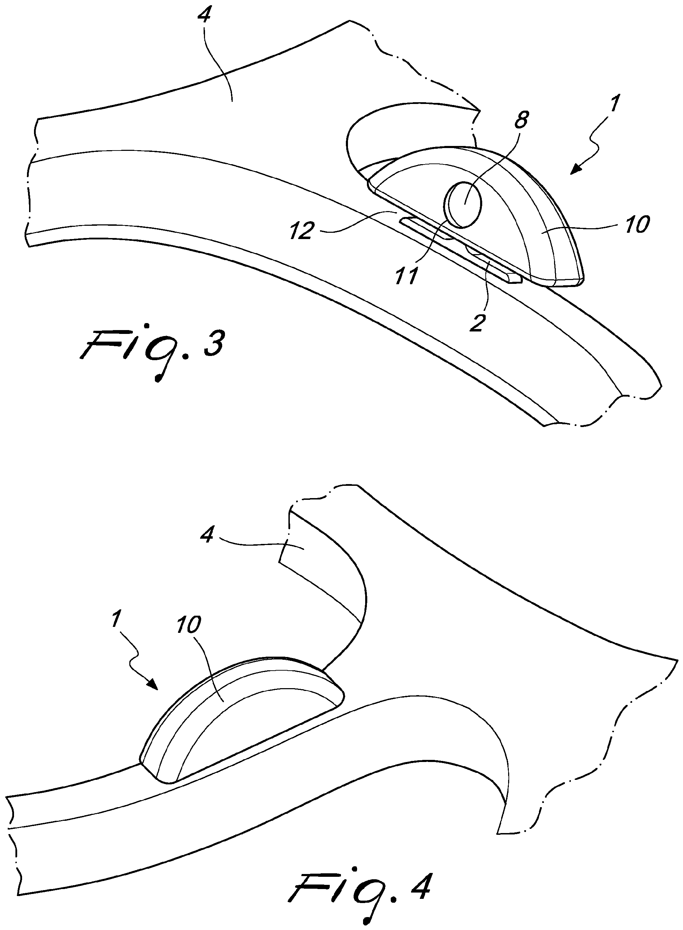

Figure 3 is an exploded partial perspective view of the eyeglasses with the nose pad according to the present invention;
Figure 4 is an additional exploded partial perspective view of the eyeglasses with the nose pad according to the present invention;

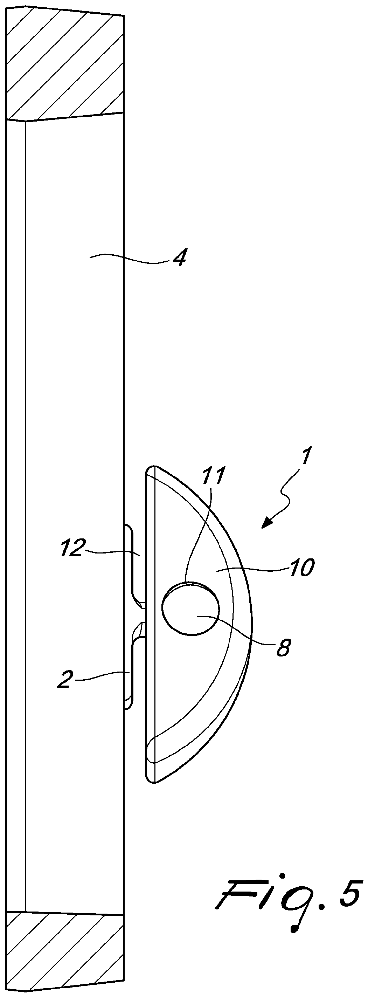

Figure 5 is a side view of the nose pad for eyeglasses in the previous figures;

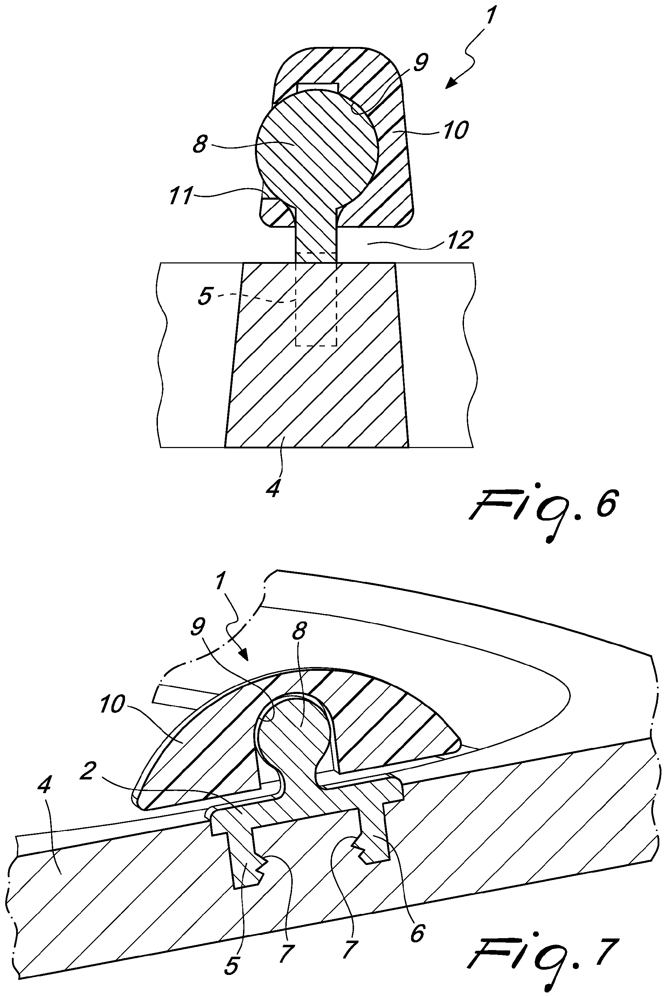

Figure 6 is a transverse cross-sectional view of the nose pad for eyeglasses according to the present invention;
Figure 7 is a longitudinal cross-sectional perspective view of the nose pad for eyeglasses according to the present invention;

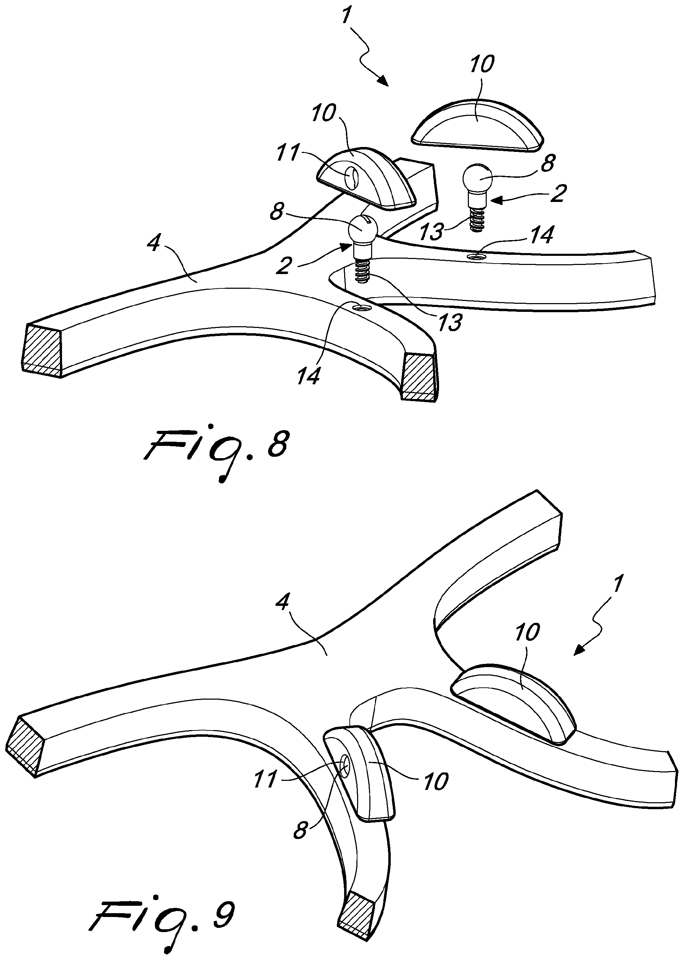

Figure 8 is an exploded perspective view of a pair of nose pads according to a second embodiment of the present invention;
Figure 9 is an additional perspective view of the pair of nose pads of Figure 8;

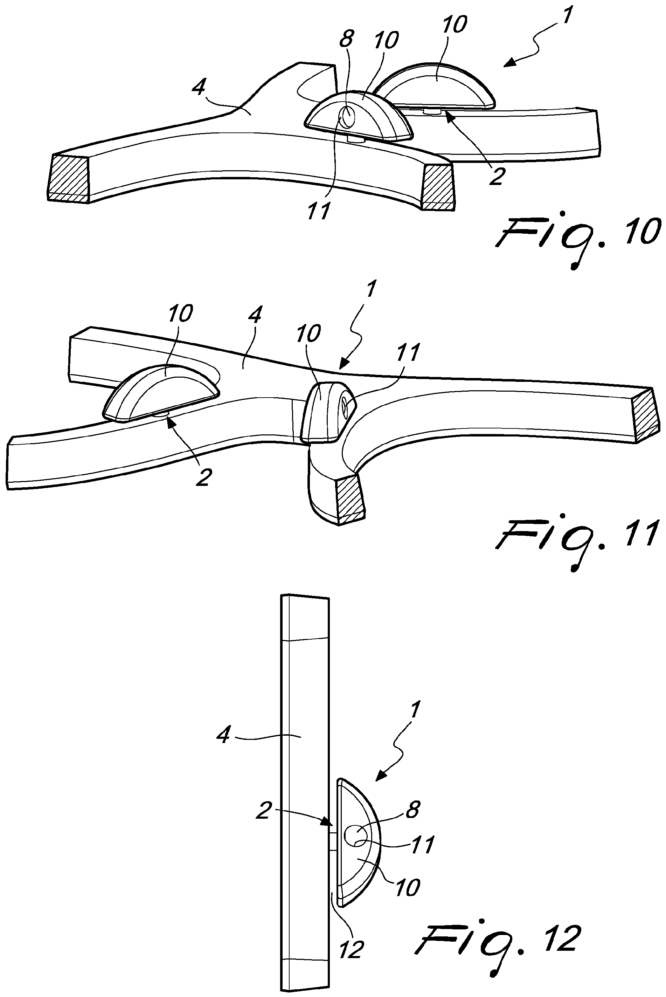

Figures 10 and 11 are additional perspective views the nose pads of Figures 8 and 9;
Figure 12 is a side view of a nose pad according to Figures 8-11;

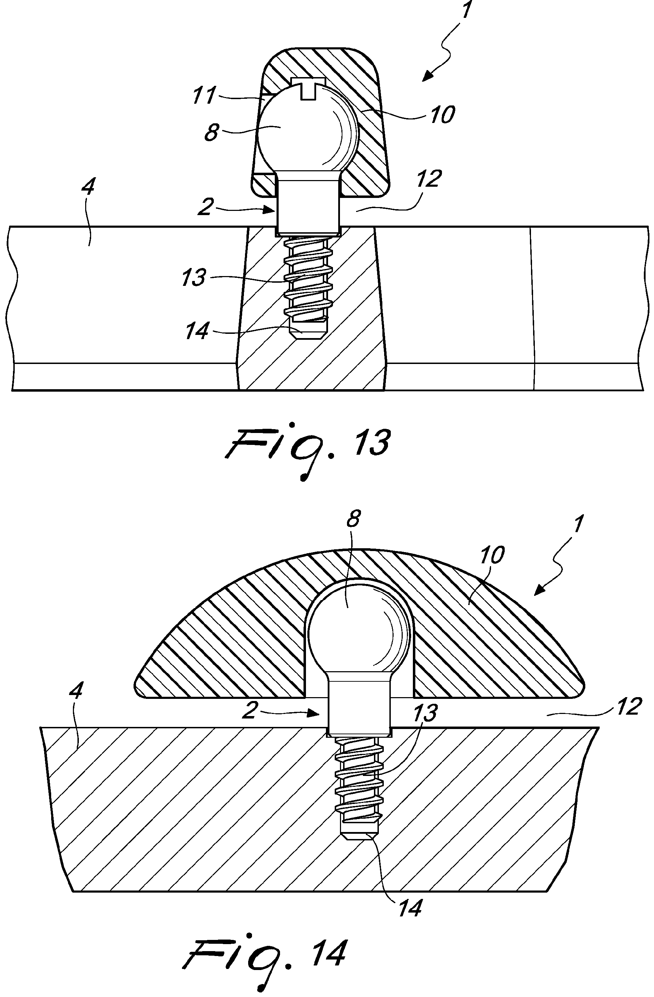

Figure 13 is a transverse cross-sectional view of a nose pad according to Figures 8-12;
Figure 14 is a longitudinal cross-sectional view of a nose pad according to Figures 8-13.

With reference to the figures, in which identical reference numerals indicate identical elements, the nose pad according to the present invention, generally designated by the reference numeral 1, comprises a first engagement means 2 adapted to be coupled with a frame 4 for eyeglasses. The first engagement means 2 is conveniently provided with at least one vertical portion and preferably, in a first embodiment, a pair of vertical portions 5 and 6 (which constitute the at least one first portion of the first engagement means 2), which are conveniently provided with teeth 7, and are elastically deformable, so that they can be coupled in the frame 4 and therefore be locked in it. Such coupling can occur for example through insertion under pressure.

The vertical portions 5 and 6 of the first engagement means 2 are substantially feet, which can be elastically deformed toward and away from each other, so as to be able to force-couple the first engagement means 2 in the frame 4.

In a second embodiment, the first engagement means 2 comprises, as the at least one vertical portion, a threaded pivot 13 adapted to be screwed into a threaded hole 14 defined in the surface of the frame 4.

Conveniently, in both embodiments, the first engagement means 2 is provided, at its end opposite from the feet 5 and 6, with a substantially spherical head 8, which is adapted to be coupled in a partially complementary shaped cavity 9 of a second engagement means 10, in which the head 8 is accommodated.

The substantially spherical head 8 can be provided with a cavity that enables it to be screwed into the first engagement means 2.

The dimensions of the cavity 9 however are smaller than the size of the substantially spherical head 8 and, conveniently, the cavity 9 is laterally open by means of a lateral through opening 11, adapted to allow the at least partial egress of the substantially spherical head 8 when the second engagement means 10 is coupled to the head 8.

A covering element (not shown in the figures) made of rubber or plastic can be arranged to cover the second engagement means 10.

The substantially spherical head 8 could, in this case, also be completely hidden by the covering element.

The second engagement means 10 is coupled with forced coupling (interlocking) onto the substantially spherical head 8, with the head 8 partially protruding from the lateral opening 11.

The second engagement means 10 constitutes the element for resting the eyeglasses on the nose of the user.

The second engagement means 10, when fitted over the substantially spherical head 8, does not come into contact with the frame 4 of the eyeglasses, but leaves a space 12 between it and the frame.

The nose pad, i.e. the element for resting the eyeglasses on the nose of the user (the second engagement means 10), can therefore be angled and/or oriented with respect to the plane of the frame 4, by virtue of the space 12 which allows a rotation of the second engagement means 10 about the substantially spherical head 8.

The nose pad (the second engagement means 10) can furthermore be rotated in the plane of the frame 4.

The invention also relates to a frame provided with a pair of nose pads as described above and a pair of eyeglasses with a frame and such a pair of nose pads.

In practice it has been found that the nose pad according to the invention fully achieves the set aim and objects, in that it makes it possible to make eyeglasses rest comfortably on the nose of the user and it allows an adjustment of the position/angling of the nose pad by virtue of the rotation that the second engagement means can perform with respect to the first engagement means, by virtue of the presence of the substantially spherical head accommodated in the corresponding cavity in the second engagement means.

This adjustment of the second engagement means around the substantially spherical head of the first engagement means makes it possible to adjust the nose pad along angles on different planes.

The nose pad, thus conceived, is susceptible of numerous modifications and variations, all of which are within the scope of the appended claims.

Moreover, all the details may be substituted by other, technically equivalent elements.

In practice the materials employed, and the contingent dimensions and shapes, may be any according to requirements and to the state of the art.

The disclosures in Italian Patent Application No. 102024000008053 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A nose pad (1) for eyeglasses, **characterized in that** it comprises a first engagement means (2) adapted to engage in a frame (4) of a pair of eyeglasses, said first engagement means (2) being provided with a lower end comprising at least one portion (5, 6, 13) adapted to be inserted in the frame (4), and with a substantially spherical head (8) at an opposite end, which is adapted to engage in a corresponding cavity (9) defined in a second engagement means (10), so that the second engagement means (10) can rotate about different axes around said substantially spherical head (8).

2. The nose pad according to claim 1, **characterized in that** said cavity (9) of the second engagement means (10) in which said substantially spherical head (8) is adapted to engage is a cavity that is partially complementary to said substantially spherical head (8) and is made of a deformable material that is adapted to allow the movement of the substantially spherical head (8) in said partially complementary cavity (9).

3. The nose pad according to claim 1, **characterized in that** said cavity (9) of said second engagement means (10) in which said substantially spherical head (8) of said first engagement means (2) is adapted to engage is a cavity that is open laterally through an opening (11) defined in a lateral surface of said second engagement means (10), said opening (11) allowing said substantially spherical head (8) to protrude at least partially from it.

4. The nose pad according to one or more of the preceding claims, **characterized in that** said at least one portion (5, 6) adapted to be inserted in the frame (4) is a pair of feet (5, 6) of said first engagement means (2), which are provided with teeth (7) and are elastically yielding for forced coupling in said frame (4).

5. The nose pad according to one or more of the preceding claims, **characterized in that** said at least one portion (5, 6, 14) adapted to be inserted in the frame (4) is a threaded pivot (13) adapted to be screwed into a hole (14) defined in the frame (4).

6. The nose pad according to one or more of the preceding claims, **characterized in that** said second engagement means (10) is coupled to said substantially spherical head (8) with a space (12) defined between said second engagement means (10) and said frame (4).

7. The nose pad according to one or more of the preceding claims, **characterized in that** said substantially spherical head (8) is provided with an internal cavity adapted to allow it to be screwed into said first engagement means (2).

8. The nose pad according to one or more of the preceding claims, **characterized in that** said second engagement means (10) is adapted to rotate around said substantially spherical head (8) of said first engagement means (2) so as to be able to angle said second engagement means (10) with respect to said first engagement means (2) and consequently with respect to said frame (4).

9. The nose pad according to one or more of the preceding claims, **characterized in that** the deformable material of which the second engagement means (10) is composed is deformable plastic or metal.

10. The nose pad according to one or more of the preceding claims, **characterized in that** it comprises a covering element made of rubber or plastic and adapted to be arranged to cover said second engagement means (10).

11. A frame for eyeglasses, comprising a pair of nose pads (1), each one of said nose pads being **characterized in that** it comprises a first engagement means (2) adapted to engage in the frame (4), said first engagement means (2) being provided with a lower end comprising at least one portion (5, 6, 13) adapted to be inserted in the frame (4), and with a substantially spherical head (8) at the opposite end, which is adapted to engage in a corresponding cavity (9) defined in a second engagement means (10), so that the second engagement means (10) can rotate about different axes around said substantially spherical head (8).

12. Eyeglasses, comprising a frame with a pair of nose pads (1), each one of said nose pads being **characterized in that** it comprises a first engagement means (2) adapted to engage in the frame (4), said first engagement means (2) being provided with a lower end comprising at least one portion (5, 6, 13) adapted to be inserted in the frame (4), and with a substantially spherical head (8) at the opposite end, which is adapted to engage in a corresponding cavity (9) defined in a second engagement means (10), so that the second engagement means (10) can rotate about different axes around said substantially spherical head (8).
